# EUROPEAN PATENT APPLICATION

(11) **EP 2 481 956 A1**
(43) Date of publication of application: **01.08.2012**
(21) Application number: 10818758.4
(22) Date of filing: 17.09.2010
(51) Int. Cl.: F16H 61/04, F16H 3/093, F16H 3/72, F16H 63/40

(54) **SHIFT DEVICE FOR VEHICLE**

(30) Priority: 24.09.2009 JP 2009218649
(71) Applicant: Aisin Seiki Kabushiki Kaisha, Aichi 448-8650 (JP); AISIN AI Co., Ltd., Nishio-shi, Aichi 445-0006 (JP)
(72) Inventor: OMURA, Masahiro, Kariya-shi Aichi 448-8650 (JP); TABATA, Mitsuhiro, Toyota-shi Aichi 471-8571 (JP); FUKUHARA, Yuichi, Nishio-shi Aichi 445-0006 (JP); SASAKI, Kan, Nishio-shi Aichi 445-0006 (JP); TANBA, Toshio, Nishio-shi Aichi 445-0006 (JP)
(74) Representative: Kramer - Barske - Schmidtchen
(86) International application number: PCT/JP2010/066173
(87) International publication number: WO 2011/037085

(57) **Abstract**

To provide a vehicle transmission apparatus including a dual clutch transmission enabling reducing clutch size and number of clutch discs. The apparatus comprises: input shafts and output shafts to which rotational power is transmitted from the input shafts in a gear-shiftable manner and which transmit rotational power toward driving wheels; clutches that disengageably transmit rotational power from an engine to the input shafts; a motor generator that rotates integrally with an input shaft; and a transmission controller that controls engagement/disengagement of the clutches, gear shifting between the input shafts and the output shafts and driving operation or regenerating operation of the motor generator upon gear shifting.

## Description

### TECHNICAL FIELD

### [Description of related application]

The present invention claims the priority of Japanese Patent Application No. 2009-218649 filed on September 24, 2009, which is incorporated herein by reference in its entirety.
The present invention relates to a vehicle transmission apparatus including a transmission that mounts two clutches therein to shift gears (dual clutch transmission), in particular, a vehicle transmission apparatus including a transmission that mounts a motor generator therein.

### BACKGROUND ART

In the conventional transmissions there is a semiautomatic transmission that enables automation of a clutch operation in a manual transmission. In a dual clutch transmission (DCT) in the semiautomatic transmission, a driving force from an output shaft of an engine is separated into a transmission path for odd-numbered gear stages (first speed, third speed, fifth speed and reverse) and a transmission path for even-numbered gear stages (second speed, fourth speed and sixth speed) and each transmission path is provided with one clutch for transmitting the driving force from the engine. In the dual clutch transmission (DCT), a transmission mechanism on the side where the clutch is engaged drives tires, while a transmission mechanism on the side where the clutch is not engaged prepares for gear shifting, and gear shifting is performed by engaging the clutch of a post-shifting stage while releasing the clutch of a pre-shifting stage. The dual clutch transmission (DCT) has both of direct feeling of a manual transmission (MT) and easiness and smoothness of an automatic transmission (AT), and can perform gear-shifting with acceleration feeling without torque drop during gear shifting.

There is disclosed a conventional dual clutch transmission that includes two input shafts, two clutches, at least one first driving shaft and at least one second driving shaft, wherein the first input shaft can be connected to the first clutch upon operation and the second input shaft can be connected with the second clutch upon operation, the first driving shaft is disposed below the second driving shaft and above the input shaft, or in vice versa, the input shaft and the driving shaft have gears engaged with each other, at least two gears constitute one shift stage, at least one gear of one shift stage is configured as a displaceable gear that allows both or one of engagement and disengagement, the other gear is advantageously configured as a fixed gear, each of the driving shafts has a driving part gear that transmits rotational force to an axle shaft driving part, and a further shaft is arranged to constitute a reverse shift stage (refer to Patent Literature 1). This literature describes that this transmission enable flexible use and realize a compact configuration.

### PRIOR ART LITERATURE

### PATENT LITERATURE

PATENT LITERATURE 1: JP Patent Kokai Publication 2007-534899A

### SUMMARY OF THE INVENTION

### PROBLEMS TO BE SOLVED BY THE INVENTION

The disclosure of the Patent Literature 1 is incorporated herein by reference in its entirety. Following analysis is made according to the present invention.
However, in the conventional dual clutch transmission, a clutches' workload is large, generating a large heating power since the clutch of the pre-shifting stage is engaged with the clutch of the pre-shifting stage while being partially engaged. For this reason, the conventional dual clutch transmission requires an increase in the number of clutch discs and the diameter of the clutches.

It is a main object of the present invention to provide a vehicle transmission apparatus including a dual clutch transmission that can reduce the diameter of clutches and the number of clutches.

### MEANS TO SOLVE THE PROBLEMS

According to one aspect of the present invention, a vehicle transmission apparatus includes a first input shaft and a second input shaft, a first output shaft to which rotational power is transmitted from the first input shaft in a gear-shiftable manner and which transmits the rotational power toward a driving wheel, a second output shaft to which rotational power is transmitted from the second input shaft in a gear-shiftable manner and which transmits the rotational power toward the driving wheel, a first clutch that disengageably transmits rotational power from an engine to the first input shaft, and a second clutch that disengageably transmits rotational power from the engine to the second input shaft. The vehicle-transmission apparatus further includes a motor generator that rotates integrally with or in engagement with a predetermined rotational element located closer to an output side than the first clutch and the second clutch, and a transmission controller that controls engagement/disengagement of the first clutch and the second clutch, gear shifting between the first input shaft and the first output shaft and between the second input shaft and the second output shaft, and a driving operation or a regenerating operation of the motor generator upon gear shifting.

### MERITORIOUS EFFECTS OF THE INVENTION

According to the present invention, upon gear shifting, by assisting the input shaft of post-shifting stage to target torque and engine speed of the post-shifting stage while releasing (disengaging) one of the first clutch and the second clutch by the motor generator and then, engaging the other of the first clutch and the second clutch, acceleration feeling without torque drop upon gear shifting can be obtained. Further, the workload of the other of the first clutch and the second clutch can be greatly reduced. Therefore, as compared to the dual clutch transmission having no motor generator, the diameter of the clutches and the number of the clutch discs can be reduced, thereby achieving cost reduction.

### BRIEF DESCRIPTION OF THE DRAWINGS

Fig. 1 is a schematic view showing the configuration of a power transmission apparatus including a transmission in a vehicle transmission apparatus according to a first example of the present invention.
Fig. 2 is a block diagram schematically showing an electronic control system of the vehicle transmission apparatus according to the first exmple of the present invention.
Fig. 3 is a schematic view showing a power transmission path at a time when a vehicle including the vehicle transmission apparatus according to the first example of the present invention is running at the first-speed stage.
Fig. 4 is a timing chart schematically showing an operation of the vehicle transmission apparatus according to the first example of the present invention.

### MODES FOR CARRYING OUT THE INVENTION

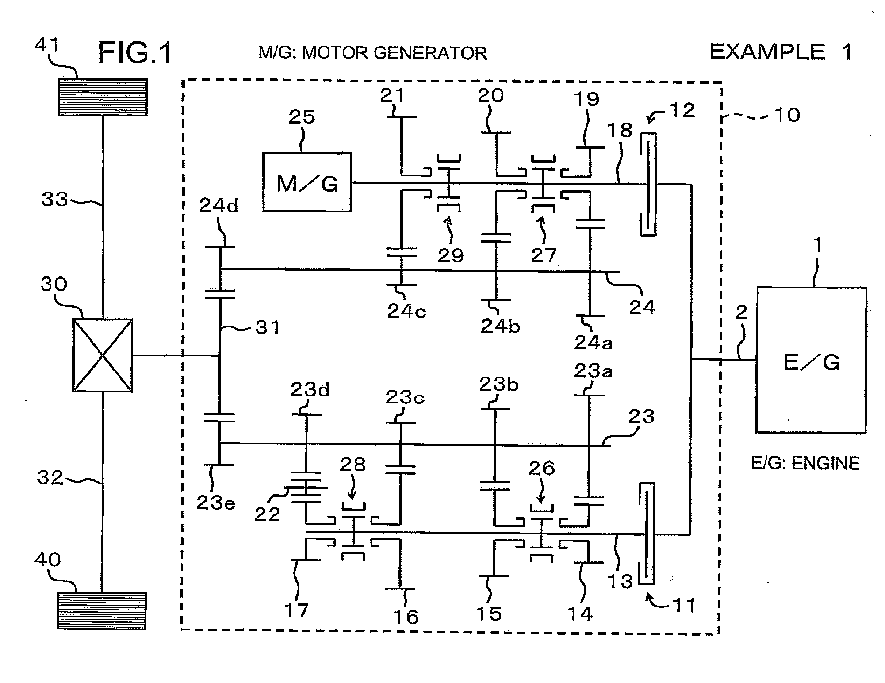

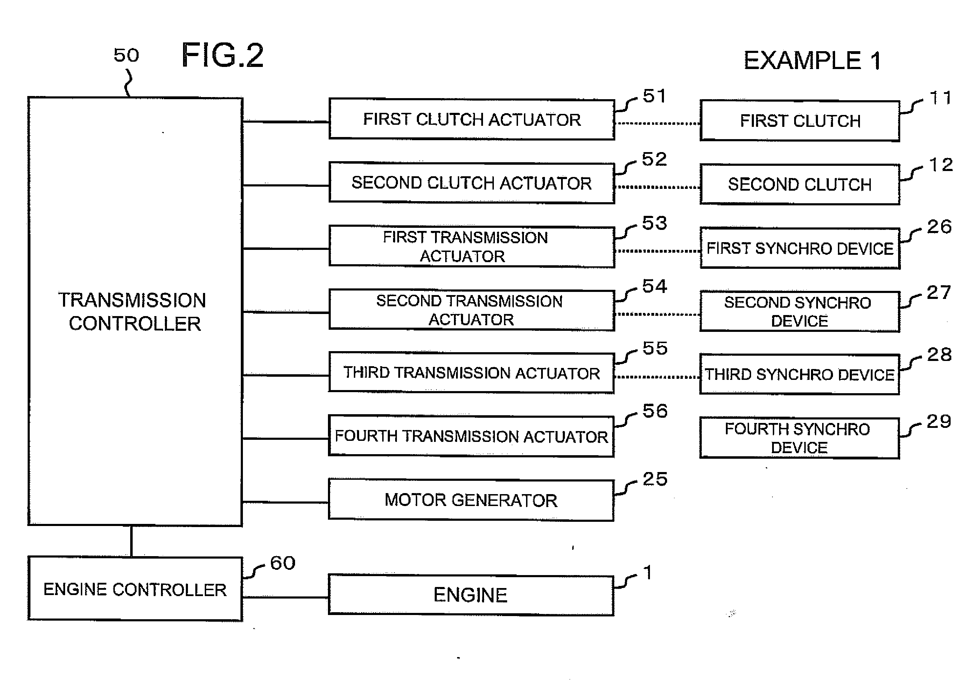

A vehicle transmission apparatus according to an example of the present invention includes a first input shaft (13 in Fig. 1) and a second input shaft (18 in Fig. 1), a first output shaft (23 in Fig. 1) to which rotational power is transmitted from the first input shaft (13 in Fig. 1) in a gear-shiftable manner and which transmits rotational power toward a driving wheel (40, 41 in Fig. 1), a second output shaft (24 in Fig. 1) to which rotational power is transmitted from the second input shaft (18 in Fig. 1) in a gear-shiftable manner and which transmits rotational power toward the driving wheel (40, 41 in Fig. 1), a first clutch (11 in Fig. 1) that couples /uncouples transmission of rotational power from an engine (1 in Fig. 1) to the first input shaft (13 in Fig. 1), a second clutch (12 in Fig. 1) that couples/uncouples transmission of rotational power from the engine (1 in Fig. 1) to the second input shaft (18 in Fig. 1), a motor generator (25 in Fig. 1) that rotates integrally with or in engagement with a predetermined rotational element (for example, 13, 18, 23, 24 in Fig. 1) located closer to an output side than the first clutch (11 in Fig. 1) and the second clutch (12 in Fig. 1), and a transmission controller (50 in Fig. 2) that controls engagement/disengagement of the first clutch (11 in Fig. 1) and the second clutch (12 in Fig. 1), gear shifting between the first input shaft (13 in Fig. 1) and the first output shaft (23 in Fig. 1) and between the second input shaft (18 in Fig. 1) and the second output shaft (24 in Fig. 1) and a driving operation or a regenerating operation, and the motor generator (25 in Fig. 1) upon gear shifting.

### Example 1

A vehicle transmission apparatus according to the first example of the present invention will be described below with reference to the accompanying drawings. Fig. 1 is a schematic view showing the configuration of a power transmission apparatus including a transmission in a vehicle transmission apparatus according to the first example of the present invention. Fig. 2 is a block diagram schematically showing an electronic control system of the vehicle transmission apparatus according to the first example of the present invention.

Referring to Fig. 1, the vehicle transmission apparatus is an apparatus including a transmission 10 (dual clutch transmission) that mounts two clutches therein to perform gear-shifting. The vehicle transmission apparatus includes the transmission 10 and a transmission controller 50.

An engine 1 is an internal combustion engine that explosively burns fuel in a cylinder and works by use of its thermal energy (refer to Fig. 1 and Fig. 2). The engine 1 has an injector actuator (not shown) that adjusts the amount of fuel injection and an igniter actuator that adjusts an ignition timing of the fuel, and is controlled by the engine controller 60. Rotational power of the engine 1 is transmitted to a first clutch 11 and a second clutch 12 of the transmission 10 through a rotational shaft 2.

The transmission 10 is a dual clutch transmission arranged in a power transmission path between the engine 1 and a differential device 30. The transmission 10 includes a motor generator 25 that rotates integrally with a second input shaft 18. The transmission 10 includes the first clutch 11, the second clutch 12, a first input shaft 13, a first-speed driving gear 14, a third-speed driving gear 15, a fifth-speed driving gear 16, a reverse driving gear 17, a second input shaft 18, a second-speed driving gear 19, a fourth-speed driving gear 20, a sixth-speed driving gear 21, an idler gear 22, a first output shaft 23, a second output shaft 24, a motor generator 25, a first synchro device 26, a second synchro device 27, a third synchro device 28 and a fourth synchro device 29.

The first clutch 11 is a device that couples/uncouples transmission of rotational power from the rotational shaft of the engine 1 to the first input shaft 13. The coupling/uncoupling operation of the first clutch 11 is performed by a first clutch actuator 51 whose driving is controlled by a transmission controller 50.

The second clutch 12 is a device that couples/uncouples transmission of rotational power from the rotational shaft of the engine 1 to the second input shaft 18. An interrupting operation of the second clutch 12 is performed by a second clutch actuator 52 whose driving is controlled by the transmission controller 50.

The first input shaft 13 is a rotational shaft that transmits rotational power to the odd-numbered and reverse driving gears 14 to 17 and is coupled to the first clutch 11. The first-speed driving gear 14, the third-speed driving gear 15, the fifth-speed driving gear 16 and the reverse driving gear 17 are attached to the first input shaft 13 from one side (right side in Fig. 1) so as to be capable of idling. These driving gears 14 to 17 are meshingly coupled to corresponding driven gears 23a to 23c and an idler gear 22.

The second input shaft 18 is a rotational shaft that transmits rotational power to the even-numbered gears 19 to 21, and is coupled to the second clutch 12. The second-speed driving gear 19, the fourth-speed driving gear 20 and the sixth-speed driving gear 21 are attached to the second input shaft 18 from one side (right side in Fig. 1) so as to be capable of idling. These driving gears 19 to 21 are meshingly coupled to driven gears 24a to 24c. The second input shaft 18 is coupled to the rotational shaft of the motor generator 25 so as not to be rotatable relative to the rotational shaft.

The idler gear 22 is a gear that constitutes a reverse speed gear by being meshingly coupled to the reverse driving gear 17 or a reverse driven gear 23d according to a position in the axial direction. The idler gear 22 is neutrally located at forward speed gears other than the reverse speed gears and is released from coupling, thereby running idle.

A first-speed driven gear 23a, a third-speed driven gear 23b, a fifth-speed driven gear 23c, a reverse driven gear 23d and a driving gear 23e are integrally attached to the first output shaft 23 from one side (right side in Fig. 1). The driven gears 23a to 23c, the reverse driven gear 23d and the driving gear 23e are meshingly coupled to the corresponding driving gears 14 to 16, idler gear 22 and driven gear 31.

A second-speed driven gear 24a, a fourth-speed driven gear 24b, the sixth-speed driven gear 24c and a driving gear 24d are integrally attached to the second output shaft 24 from one side (right side in Fig. 1). The driven gears 24a to 24c and driving gear 24d are meshingly coupled to the corresponding driving gears 19 to 21 and driven gear 31.

The motor generator 25 is a synchronous generator-motor that can be driven as both a generator and a motor. A rotational shaft of the motor generator 25 is coupled to the second input shaft 18. Driving of the motor generator 25 is controlled by the transmission controller 50. The rotational shaft of the motor generator 25 is not necessarily coupled to the second input shaft 18 and may rotate integrally with or in meshing-engagement with a predetermined rotational element (for example, the first input shaft 13 and the output shafts 23, 24) located closer to the output side than the clutches 11, 12. Alternatively, the two motor generators 25 may be prepared and, for example, a rotational shaft of one motor generator 25 may be coupled to the second input shaft 18 and a rotational shaft of the other motor generator 25 may be coupled to the first input shaft 13.

The first synchro device 26 is a device that switches-over between the first speed and the third speed. The first synchro device 26 synchronizes a rotational speed of the first input shaft 13 with a rotational speed of the first-speed driving gear 14 or the third-speed driving gear 15 to integrally rotate the first input shaft 13 and the first-speed driving gear 14 or the third-speed driving gear 15. The switching-over and synchronizing operation of the first synchro device 26 is performed by a first transmission actuator 53, driving of which is controlled by the transmission controller 50.

The second synchro device 27 is a device that switches-over between the second speed and the fourth speed. The second synchro device 27 synchronizes a rotational speed of the second input shaft 18 with a rotational speed of the second-speed driving gear 19 or the fourth-speed driving gear 20 to integrally rotate the second input shaft 18 and the second-speed driving gear 19 or the fourth-speed driving gear 20. The switching-over and synchronizing operation of the second synchro device 27 is performed by a second transmission actuator 54, driving of which is controlled by the transmission controller 50.

The third synchro device 28 is a device that switches-over between the fifth speed and reverse. The third synchro device 28 synchronizes a rotational speed of the first input shaft 13 with a rotational speed of the fifth-speed driving gear 16 or the reverse driving gear 17 to integrally rotate the first input shaft 13 and the fifth-speed driving gear 16 or the reverse driving gear 17. The switching-over and synchronizing operation of the third synchro device 28 is performed by a third transmission actuator 55, driving of which is controlled by the transmission controller 50.

The fourth synchro device 29 is a device that selects the sixth speed. The fourth synchro device 29 synchronizes a rotational speed of the second input shaft 18 with a rotational speed of the sixth-speed driving gear 21 to integrally rotate the second input shaft 18 and the sixth-speed driving gear 21. The selecting and synchronizing operation of the fourth synchro device 29 is performed by a fourth transmission actuator 56, driving of which is controlled by the transmission controller 50.

A differential device 30 is a device that absorbs a difference between right and left shafts 32, 33 in the number of revolutions, enabling smooth rolling driving. The differential device 30 differentially outputs rotational power inputted from the driven gear 31 toward the driving wheels 40, 41 through the shafts 32, 33, respectively.

The transmission controller 50 is a controller that controls the clutch actuators 51, 52, the transmission actuators 53 to 56 and the motor generator 25. The transmission controller 50 has a computer function of performing control according to a program. The transmission controller 50 stores a program, a database, a map and so on therein. The transmission controller 50 is electrically connected to a shift lever load sensor (not shown) that detects a load (shift lever load) generated when a shift lever (not shown) of the transmission 10 is operated, and receives an input of a detection signal. The transmission controller 50 is electrically connected to the rotational sensors 42, 43 that detect the number of revolutions of the shafts 32, 33, respectively, and receives inputs of detection signals. The transmission controller 50 is electrically connected to a gear position sensor (not shown) that detects the actual shift stage in the transmission 10, and receives an input of a detection signal. The transmission controller 50 is electrically connected to a transmission input shaft revolution speed sensor (not shown) that detects the number of revolutions of the input shafts 13, 18 of the transmission 10, and receives an input of a detection signal. The transmission controller 50 is electrically connected to an engine revolution speed sensor (not shown) that detects the number of revolutions of the engine 1, and receives an input of a detection signal. The transmission controller 50 collects information on driving states, which is necessary for control, (for example, shift position detected by the shift lever load sensor (not shown), the number of revolutions of the input shafts, which are detected by the transmission input shaft revolution speed sensor (not shown), the number of revolutions of the output shafts, which are detected by an output shaft revolution speed sensor (not shown) and engine speed sent from the engine controller 60) and makes a calculation according to a predefined program to control clutch actuators 51, 52, transmission actuators 53 to 56 and the motor generator 25.

The transmission controller 50 controls driving of the first clutch actuator 51, thereby controlling coupling/uncoupling (i.e., coupling state) of the first clutch 11. The transmission controller 50 controls driving of the second clutch actuator 52, thereby controlling coupling/uncoupling (i.e., coupling state) of the second clutch 12. The transmission controller 50 controls driving of the first transmission actuator 53, thereby controlling switching-over and synchronization of the first synchro device 26. The transmission controller 50 controls driving of the second transmission actuator 54, thereby controlling switching-over and synchronization of the second synchro device 27. The transmission controller 50 controls driving of the third transmission actuator 55, thereby controlling switching-over and synchronization of the third synchro device 28. The transmission controller 50 controls driving of the fourth transmission actuator 56, thereby controlling selection and synchronization of the fourth synchro device 29. The control operation of the transmission controller 50 will be described hereinafter.

The engine controller 60 is a computer that controls the engine 1. The engine controller 60 collects information on engine operating states, which is necessary for control (for example, accelerator opening detected by an accelerator pedal sensor (not shown), engine rotational speed Ne detected by the engine rotational speed sensor (not shown) and ON/OFF state of an ignition switch (not shown), and makes a calculation according to a predefined program to control actuators such as an injector (not shown) and an igniter (not shown). The engine controller 60 is electrically connected to the transmission controller 50 and can supply the information necessary for the transmission controller 50 (engine rotational speed Ne, accelerator opening, etc.) to the transmission controller 50.

In the configuration of the transmission 10 in Fig. 1, synchronization between the input shaft 13 and the driving gears 14 to 17 and between the input shaft 18 and the driving gears 19 to 21 can be achieved, the output shaft 23 is integral with the driven gears 23a to 23d and the output shaft 24 is integral with the driven gears 24a to 24c. However, a formation is also possible in which synchronization between the output shaft 23 and the driven gears 23a to 23d and between the output shaft 24 and the driven gears 24a to 24c may be achieved, the input shaft 13 may be integral with the driving gears 14 to 17 and the input shaft 18 may be integral with the driving gears 19 to 21.

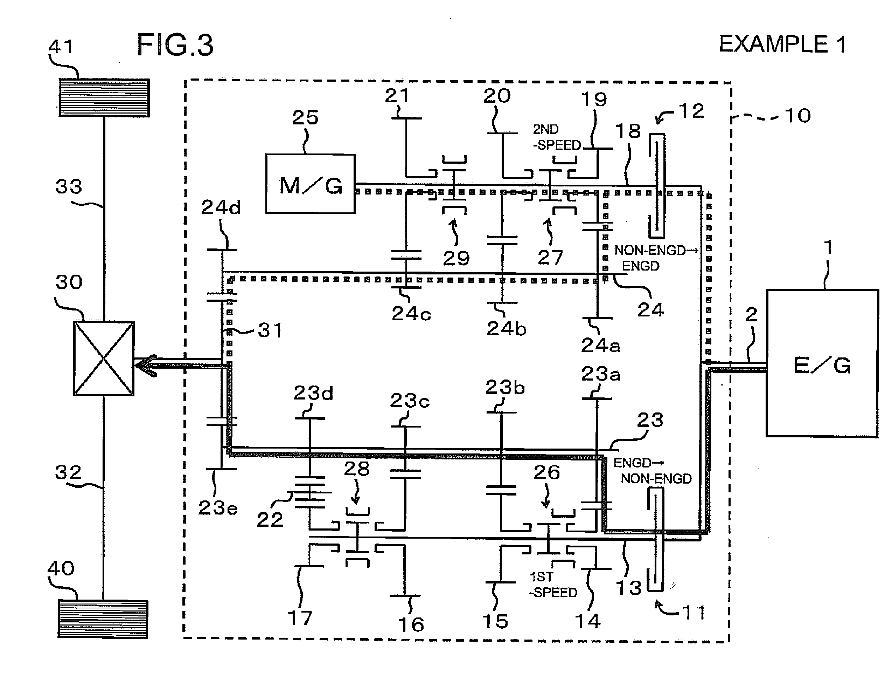

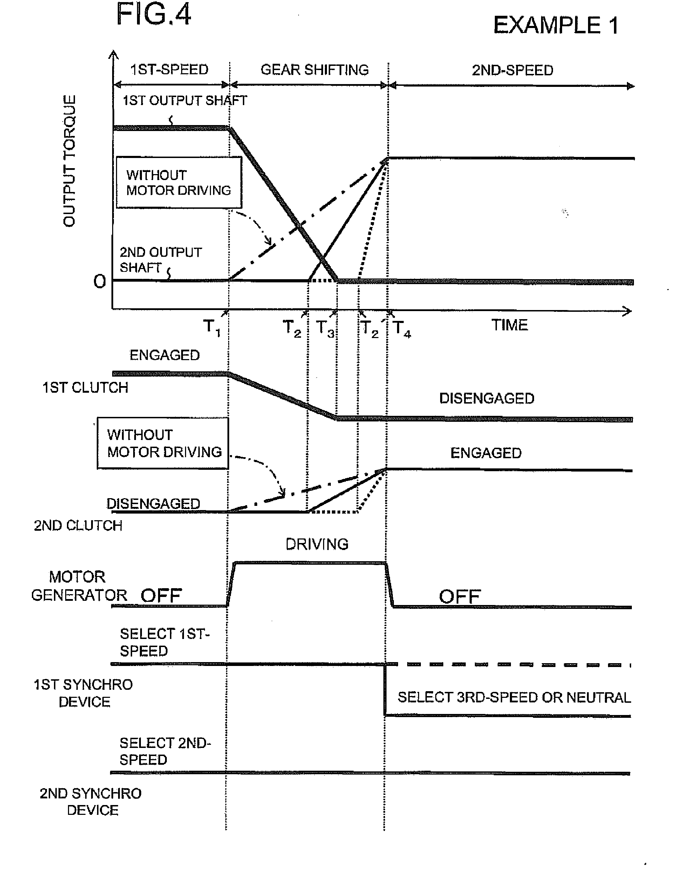

An operation of the vehicle transmission apparatus according to the first example of the present invention will be described below with reference to the accompanying drawings. Fig. 3 is a schematic view showing the power transmission path at the time when a vehicle including the vehicle transmission apparatus according to the first example of the present invention is running at the first-speed stage. Fig. 4 is a timing chart schematically showing the operation of the vehicle transmission apparatus according to the first example of the present invention.

Referring to Fig. 3, for example, when the vehicle including the vehicle transmission apparatus is running at the first-speed stage, the side engaged with the clutch drives tires, while the side disengaged with the clutch prepares for gear shifting. That is, the transmission controller (50 in Fig. 2) controls the first clutch actuator (51 in Fig. 2) so as to engage the first clutch 11, controls the first transmission actuator (53 in Fig. 2) so as to synchronize the first input shaft 13 with the first-speed driving gear 14, controls the second clutch actuator (52 in Fig. 2) so as not to engage the second clutch 12, controls the second transmission actuator (54 in Fig. 2) so as to synchronize the second input shaft 18 with the second-speed driving gear 19, makes the other transmission actuators (55, 56 in Fig. 2) neutral and turns OFF the motor generator 25. As a result, as represented by a thick solid line in Fig. 3, the rotational power of the engine 1 is transmitted to the rotational shaft 2, the first clutch 11, the first input shaft 13, the first synchro device 26, the first-speed driving gear 14, the first-speed driven gear 23a, the first output shaft 23, the driving gear 23e, the driven gear 31, the differential device 30 and the shafts 33, 32 in this order to drive the driving wheels 40, 41. At this time, states of the first clutch 11, the second clutch 12, the motor generator 25, the first synchro device 26 and the second synchro device 27 are in a first-speed section as shown in Fig. 4.

When the first-speed gear is shifted to the second-speed gear, the transmission controller (50 in Fig. 2) controls clutch actuators (51, 52 in Fig. 2) so as to engage the second clutch 12 while releasing the first clutch 11 and to drive the motor generator 25. That is, referring to a gear shift section in Fig. 4, at Time T₁ when gear shifting starts, although release of the first clutch (11 in Fig. 3) and driving of the motor generator (25 in Fig. 3) (driving to assist rotation of the second input shaft (18 in Fig. 3) are started, the second clutch (12 in Fig. 3) remains disengaged. During a period from Time T₁ to Time T₂, although the first clutch (11 in Fig. 3) is gradually released and the motor generator (25 in Fig. 3) is driven, the second clutch (12 in Fig. 3) remains disengaged. At Time T₂, engagement of the second clutch (12 in Fig. 3) is started. At a period from Time T₂ to Time T₃, the second clutch (12 in Fig. 3) is gradually engaged, the first clutch (11 in Fig. 3) is gradually released and the motor generator (25 in Fig. 3) is driven. At Time T₃, the first clutch (11 in Fig. 3) becomes disengaged to complete release. During a period from Time T₃ to Time T₄, the second clutch (12 in Fig. 3) is gradually engaged and the motor generator (25 in Fig. 3) is driven. At Time T₄, the second clutch (12 in Fig. 3) is engaged and driving of the motor generator (25 in Fig. 3) is finished. By driving the motor generator (25 in Fig. 3) during the period from Time T₁ to Time T₄ in this manner, the second input shaft (18 in Fig. 3) is assisted according to a torque and a number of revolutions after gear shifting (i.e., post-shifting).

After that, when a vehicle including the vehicle transmission apparatus is running at the second-speed gear stage, as in running at the first-speed gear stage, the side engaged with the clutch drives tires, while the side disengaged with the clutch prepares for gear shifting (refer to a section of second speed in Fig. 4). During running at the second-speed gear stage, the transmission controller (50 in Fig. 2) controls the first transmission actuator (53 in Fig. 2) so as to synchronize the first input shaft 13 with the third-speed driving gear 15 when the vehicle speed is increasing (i.e., under acceleration), controls the first transmission actuator (53 in Fig. 2) so as to synchronize the first input shaft 13 with the first-speed driving gear 14 when the vehicle speed is decreasing, and controls the first transmission actuator (53 in Fig. 2) so as to become neutral when the vehicle speed is constant.

In the above-mentioned example, when the first-speed gear is shifted to the second-speed gear, engagement of the second clutch (12 in Fig. 3) is started during release of the first clutch (11 in Fig. 3), as long as the motor generator (25 in Fig. 3) has a high output, as represented by a thick dotted line in Fig. 4, engagement of the second clutch (12 in Fig. 3) may be started at Time T₂ when release of the first clutch (11 in Fig. 3) is finished. Alternatively, the timing when engagement of the second clutch (12 in Fig. 3) is started may be varied depending on the acceleration of the vehicle, engine speed and the like.

With a configuration without the motor generator (25 in Fig. 3), when the first-speed gear is shifted to the second-speed gear, as represented by a thick chain in Fig. 4, at Time T₁, release of the first clutch (11 in Fig. 3) and engagement of the second clutch (12 in Fig. 3) are simultaneously started.

In the First example, for example, upon gear shifting from the first speed to the second speed, acceleration feeling without torque drop upon gear shifting can be obtained, by assisting the second input shaft 18 to the target torque and engine speed while releasing the first clutch 11 by the motor generator 25 followed by engaging the second clutch 12, and further, the workload of the second clutch 12 can be greatly reduced. Therefore, as compared to the dual clutch transmission having no motor generator 25, the diameter of the clutches and the number of the clutch discs can be reduced, thereby achieving cost reduction.

Moreover, for example, upon gear shifting from the first speed to the second speed, gear shift shock can be also reduced since a transfer torque between the released first clutch 11 and the engaged clutch 12 can be reduced or eliminated.

Disclosure of the above-mentioned Patent Literature is incorporated herein by reference. Within the scope of the entire disclosure (including claims) of the present invention and based on its basic technical concept, the example can be changed or adjusted. Further, within the scope of claims of the present invention, any combination and selection of various disclosed constituents is possible. That is, as a matter of course, the present invention includes various changes and modifications that can be made by those skilled in the art on the basis of the entire disclosure including claims and its technical concept.

### EXPLANATIONS OF REFERENCE SIGNS

- 1: Engine
- 2: Rotational shaft
- 10: Transmission
- 11: First clutch
- 12: Second clutch
- 13: First input shaft
- 14: First-speed driving gear
- 15: Third-speed driving gear
- 16: Fifth-speed driving gear
- 17: Reverse driving gear
- 18: Second input shaft
- 19: Second-speed driving gear
- 20: Fourth-speed driving gear
- 21: Sixth-speed driving gear
- 22: Idler gear
- 23: First output shaft
- 23a: First-speed driven gear
- 23b: Third-speed driven gear
- 23c: Fifth-speed driving gear
- 23d: Reverse driving gear
- 23e: Driving gear
- 24: Second output shaft
- 24a: Second-speed driven gear
- 24b: Fourth-speed driven gear
- 24c: Sixth-speed driven gear
- 24d: Driving gear
- 25: Motor generator
- 26: First synchro device
- 27: Second synchro device
- 28: Third synchro device
- 29: Fourth synchro device
- 30: Differential device
- 31: Driven gear
- 32, 33: Shaft
- 40, 41: Driving wheel
- 42, 43: Rotational sensor
- 50: Transmission controller
- 51: First clutch actuator
- 52: Second clutch actuator
- 53: First transmission actuator
- 54: Second transmission actuator
- 55: Third transmission actuator
- 56: Fourth transmission actuator
- 60: Engine controller

## Claims

1. A vehicle transmission apparatus, comprising:
a first input shaft and a second input shaft;
a first output shaft to which rotational power is transmitted from the first input shaft in a gear-shiftable manner and which transmits rotational power toward a driving wheel;
a second output shaft to which rotational power is transmitted from the second input shaft in a gear-shiftable manner and which transmits rotational power toward said driving wheel;
a first clutch that disengageably transmits rotational power from an engine to the first input shaft;
a second clutch that disengageably transmits rotational power from the engine to the second input shaft;
a motor generator that rotates integrally with or in engagement with a predetermined rotational element located closer to an output side than the first clutch and the second clutch; and
a transmission controller that controls engagement/disengagement of the first clutch and the second clutch, gear shifting between the first input shaft and the first output shaft and between the second input shaft and the second output shaft, and a driving operation or a regenerating operation of the motor generator upon gear shifting.

2. The vehicle transmission apparatus according to claim 1, wherein a rotational shaft of the motor generator is coupled to the first input shaft or the second input shaft.

3. The vehicle transmission apparatus according to claim 2, wherein a rotational shaft of the motor generator is coupled to the input shaft including a second-speed gear stage among the first input shaft and the second input shaft.

4. The vehicle transmission apparatus according to claim 1, further comprising another motor generator, a rotational shaft of which is coupled to the first input shaft, wherein
a rotational shaft of the motor generator is coupled to the second input shaft.

5. The vehicle transmission apparatus according to any one of claims 1 to 4, wherein the transmission controller controls driving operation of the motor generator according to any one of a signal from an engine controller that controls the engine and a signal(s) from one or more sensors that detect a vehicle driving state.

6. The vehicle transmission apparatus according to any one of claims 1 to 5, wherein upon gear shifting, the transmission controller performs control to simultaneously start disengaging one of the first clutch and the second clutch being in an engaged state and driving the motor generator, and after lapse of a predetermined time from said start of disengaging of the one clutch to start engaging the other clutch which is in an disengaged state.

7. The vehicle transmission apparatus according to any one of claims 1 to 4, further comprising:
a plurality of first fixed gears fixed to one of the first input shaft and the first output shaft;
a plurality of first displaceable gears that are arranged so as to rotate relative to the other of the first input shaft and the first output shaft, and engage with the corresponding first fixed gears;
a plurality of first synchro devices configured to synchronize the first displaceable gears with the other of the first input shaft and the first output shaft;
a plurality of second fixed gears fixed to one of the second input shaft and the second output shaft;
a plurality of second displaceable gears that are arranged so as to rotate relative to the other of the second input shaft and the second output shaft, and engage with the corresponding second fixed gears; and
a plurality of second synchro devices configured to synchronize the second displaceable gear with the other of the second input shaft and the second output shaft, wherein
the controller controls synchronization of the first synchro device and the second synchro device.

## Amended claims

### Amended claims under Art. 19.1 PCT

**1.** (Amended) A vehicle transmission apparatus, comprising:
a first input shaft and a second input shaft;
a first output shaft to which rotational power is transmitted from the first input shaft in a gear-shiftable manner and which transmits rotational power toward a driving wheel;
a second output shaft to which rotational power is transmitted from the second input shaft in a gear-shiftable manner and which transmits rotational power toward said driving wheel;
a first clutch that disengageably transmits rotational power from an engine to the first input shaft;
a second clutch that disengageably transmits rotational power from the engine to the second input shaft;
a motor generator that rotates integrally with or in engagement with a predetermined rotational element located closer to an output side than the first clutch and the second clutch; and
a transmission controller that controls engagement/disengagement of the first clutch and the second clutch, gear shifting between the first input shaft and the first output shafting and between the second input shaft and the second output shaft, and a driving operation or a regenerating operation of the motor generator upon gear shifting, wherein
upon gear shifting, the transmission controller performs control to simultaneously start disengaging one of the first clutch and the second clutch being in an engaged state and driving the motor generator, and after lapse of a predetermined time from said start of disengaging of the one clutch to start engaging the other clutch which is in an disengaged state.

**2.** The vehicle transmission apparatus according to claim 1, wherein a rotational shaft of the motor generator is coupled to the first input shaft or the second input shaft.

**3.** The vehicle transmission apparatus according to claim 2, wherein a rotational shaft of the motor generator is coupled to the input shaft including a second-speed gear stage among the first input shaft and the second input shaft.

**4.** The vehicle transmission apparatus according to claim 1, further comprising another motor generator, a rotational shaft of which is coupled to the first input shaft, wherein
a rotational shaft of the motor generator is coupled to the second input shaft.

**5.** The vehicle transmission apparatus according to any one of claims 1 to 4, wherein the transmission controller controls driving operation of the motor generator according to any one of a signal from an engine controller that controls the engine and a signal(s) from one or more sensors that detect a vehicle driving state.

**6.** (Cancelled)

**7.** The vehicle transmission apparatus according to any one of claims 1 to 4, further comprising:
a plurality of first fixed gears fixed to one of the first input shaft and the first output shaft;
a plurality of first displaceable gears that are arranged so as to rotate relative to the other of the first input shaft and the first output shaft, and engage with the corresponding first fixed gears;
a plurality of first synchro devices configured to synchronize the first displaceable gears with the other of the first input shaft and the first output shaft;
a plurality of second fixed gears fixed to one of the second input shaft and the second output shaft;
a plurality of second displaceable gears that are arranged so as to rotate relative to the other of the second input shaft and the second output shaft, and engage with the corresponding second fixed gears; and
a plurality of second synchro devices configured to synchronize the second displaceable gear with the other of the second input shaft and the second output shaft, wherein
the controller controls synchronization of the first synchro device and the second synchro device.
